# EUROPEAN PATENT APPLICATION

(11) **EP 4 773 287 A1**
(43) Date of publication of application: **08.07.2026**
(21) Application number: 24872682.0
(22) Date of filing: 18.07.2024
(51) Int. Cl.: H01M 10/0562, C08F 297/04, H01M 10/052

(54) **SOLID ELECTROLYTE MEMBRANE AND ALL-SOLID-STATE BATTERY COMPRISING SAME**

(30) Priority: 26.09.2023 KR 20230128869
(71) Applicant: LG Energy Solution, Ltd., Seoul 07335 (KR)
(72) Inventor: PARK, June, Seoul 04713 (KR); CHOI, Bo Na, Daejeon 34014 (KR); RYU, Won Yeong, Daejeon 34014 (KR); KIM, Yun Kyoung, Daejeon 34122 (KR); KIM, Young Bok, Daejeon 34122 (KR); KIM, Dong Hyeon, Daejeon 34122 (KR); LEE, Ji Eun, Daejeon 34122 (KR); KIM, Ye Eun, Daejeon 34122 (KR)
(74) Representative: Hoffmann Eitle
(86) International application number: PCT/KR2024/010332
(87) International publication number: WO 2025/070972

(57) **Abstract**

Disclosed are a solid electrolyte membrane comprising: a solid electrolyte; and a block copolymer comprising a unit structure derived from an aromatic vinyl monomer and a unit structure derived from a conjugated diene-based monomer, and an all-solid-state battery comprising the same.

## Description

### BACKGROUND

### 1. Field of the Invention

The present disclosure relates to a solid electrolyte membrane and an all-solid-state battery comprising the same.

### 2. Discussion of Related Art

A secondary battery refers to a device that converts and stores external electrical energy in the form of chemical energy and generates electricity when necessary, and is also referred to as a rechargeable battery. Conventional secondary batteries comprise lead-acid batteries, nickel-cadmium batteries (NiCd), nickel-metal hydride batteries (NiMH), and lithium secondary batteries. Secondary batteries have economic and environmental advantages over primary batteries, which are disposed of after a single use.

Meanwhile, as the market demands lightweight, thin, and small portable devices or automobile accessories, the demand for technological development of secondary batteries used as energy sources for these devices is also increasing. In particular, as various types of electric vehicles are commercialized, it is becoming important to develop secondary batteries that can reduce manufacturing costs and weight and extend service life. In particular, efforts have been made to improve lithium secondary batteries, which are lightweight and have high energy density, high operating potential, and long cycle life among secondary batteries.

Generally, a lithium secondary battery is manufactured by mounting an electrode assembly comprising a negative electrode, a positive electrode, and a separator inside a cylindrical or prismatic metal can or a pouch-type case of an aluminum laminate sheet, and injecting an electrolyte into the electrode assembly. Since such a lithium secondary battery requires a case having a constant space such as a cylindrical, prismatic, or pouch type, there are restrictions in developing various types of portable devices. Therefore, there is a demand for the development of a novel type of lithium secondary battery that is easily deformable.

Meanwhile, as a conventional electrolyte for a lithium secondary battery, a liquid-state electrolyte in which a lithium salt is dissolved in a non-aqueous organic solvent has been mainly used. However, the liquid-state electrolyte not only has a high possibility of volatilization or leakage of the organic solvent but also has a safety problem in that combustion or explosion may occur according to an increase in the ambient temperature and the temperature of the battery itself.

An all-solid-state battery using a solid electrolyte has an advantage in that an electrode assembly can be manufactured in a safe and simple form because organic solvents are excluded. However, all-solid-state batteries have a limitation in that their actual energy density and output do not reach those of conventional lithium secondary batteries using liquid electrolytes.

In addition, since an all-solid-state battery has an electrolyte membrane comprising a solid electrolyte positioned between a positive electrode and a negative electrode, it is bulky and heavy compared to a conventional lithium secondary battery, resulting in a decrease in energy density per volume and energy density per weight. If the electrolyte membrane is made thin to prevent this, a short circuit between the positive electrode and the negative electrode may occur.

Nitrile-butadiene rubber (NBR) is mainly used as a binder for a conventional solid electrolyte membrane for an all-solid-state battery. However, when a solid electrolyte membrane comprising a nitrile-butadiene rubber binder is manufactured with a small thickness, there are problems of insufficient moisture stability, mechanical properties, and manufacturing processability.

As such, a solid electrolyte membrane for an all-solid-state battery needs to be manufactured as a thin film for high energy density and low resistance, but various mechanical properties must be satisfied even in such a thin film.

Therefore, there is a need for the development of a solid electrolyte membrane for an all-solid-state battery that not only has excellent ionic conductivity but also can secure flexibility.

### (Prior Art Documents)

### (Patent Documents)

(Patent Document 0001) Korean Patent Application Publication No. 10-2021-0098246

### SUMMARY OF THE INVENTION

The present disclosure has been devised in view of the aforementioned problems of the conventional art, and was completed by confirming that ionic conductivity and flexibility can be improved by using a specific block copolymer as a binder and controlling the content of unit structures derived from each monomer, the ratio of linear structures to branched structures, and the molecular weight.

Accordingly, an object of the present disclosure is to provide a solid electrolyte membrane for an all-solid-state battery having excellent ionic conductivity and flexibility.

In addition, another object of the present disclosure is to provide an all-solid-state battery comprising the solid electrolyte membrane.

According to an aspect, there is provided a solid electrolyte membrane comprising: a solid electrolyte; and a block copolymer comprising a unit structure derived from an aromatic vinyl monomer and a unit structure derived from a conjugated diene-based monomer.

In an embodiment, a content of the unit structure derived from the aromatic vinyl monomer may be 15 to 45 parts by weight based on 100 parts by weight of the block copolymer.

In an embodiment, at least a portion of the block copolymer may comprise a branched structure within a chain thereof.

In an embodiment, a ratio of comprising the branched structure in the block copolymer may be 5 to 50% by weight.

In an embodiment, a weight average molecular weight of the block copolymer may be 5,000 to 1,000,000 g/mol.

In an embodiment, the block copolymer may be dissolved in a non-polar solvent at room temperature.

In an embodiment, the block copolymer may be bonded to at least a portion of a surface of the solid electrolyte.

In an embodiment, an ionic conductivity of the solid electrolyte membrane may be 1.2 to 10 mS/cm.

According to another aspect, there is provided an all-solid-state battery comprising a positive electrode, a negative electrode, and a solid electrolyte membrane interposed therebetween, wherein the solid electrolyte membrane is the aforementioned solid electrolyte membrane.

### DESCRIPTION OF DRAWINGS

FIG. 1 is a schematic diagram of a solid electrolyte and a block copolymer binder according to an aspect of the present disclosure.
FIG. 2 is a photograph of a solid electrolyte membrane for an all-solid-state battery according to an embodiment of the present disclosure.
FIG. 3 is a photograph of a solid electrolyte membrane for an all-solid-state battery according to another embodiment of the present disclosure.
FIG. 4 is a graph measuring characteristics of an all-solid-state battery comprising a solid electrolyte membrane according to still another embodiment of the present disclosure.

### DETAILED DESCRIPTION OF EXEMPLARY EMBODIMENTS

Hereinafter, an aspect of the present disclosure will be described with reference to the accompanying drawings. However, the descriptions of the specification may be implemented in many different forms and, therefore, are not limited to the examples described herein. In the drawings, parts irrelevant to the description are omitted in order to clearly describe an aspect of the present disclosure, and similar reference numerals are assigned to similar parts throughout the specification.

Throughout the specification, when a part is referred to as being "connected" to another part, this comprises not only a case of being "directly connected" but also a case of being "indirectly connected" with another member interposed therebetween. In addition, when a part is referred to as "comprising" a certain component, this means that other components may be further provided rather than excluding other components, unless specifically stated to the contrary.

In the specification, when a range of numerical values is described, the value has the precision of the significant figures provided according to standard rules in chemistry for significant figures, unless a specific range thereof is otherwise described. For example, 10 comprises a range of 5.0 to 14.9, and the number 10.0 comprises a range of 9.50 to 10.49.

Hereinafter, an aspect of the present disclosure will be described in detail with reference to the accompanying drawings.

### Solid Electrolyte Membrane

A solid electrolyte membrane according to an aspect may comprise: a solid electrolyte; and a block copolymer comprising a unit structure derived from an aromatic vinyl monomer and a unit structure derived from a conjugated diene-based monomer.

A secondary battery is a device capable of storing and using energy through charging and discharging, which is a conversion between electrical energy and chemical energy. Among these, a lithium secondary battery utilizes the movement of lithium ions and electrons.

In a conventional lithium secondary batteries, lithium ions are transferred through a liquid electrolyte in which a lithium salt is dissolved in an organic solvent. The organic solvent used herein is highly volatile and easily ignites or explodes, so technologies for replacing it are being developed.

An all-solid-state battery, in which the liquid electrolyte is replaced with a solid electrolyte, has low risk of fire or explosion and thus possesses excellent stability; therefore, it is regarded as an essential technology for manufacturing lithium secondary batteries having high output and high energy density.

However, a solid electrolyte has lower ionic conductivity compared to a liquid electrolyte. In addition, there is a problem in that, upon repeated charging and discharging processes, the volume of components constituting a battery cell changes, and if each configuration is separated from each other, ionic conduction becomes impossible, resulting in a decrease in capacity.

To solve these problems, it is necessary to make the solid electrolyte membrane thin and to apply a binder having excellent elasticity to minimize the capacity decrease caused by volume changes.

Meanwhile, a solid electrolyte membrane is manufactured by coating a slurry, in which a particulate solid electrolyte and a binder are mixed in a solvent, onto a release film, drying the same, and then removing the release film. Therefore, the solid electrolyte and the binder must be well-dispersed in the solvent without side reactions.

The solid electrolyte may be at least one selected from the group consisting of a sulfide-based solid electrolyte, an oxide-based solid electrolyte, and a polymer-based solid electrolyte.

The sulfide-based solid electrolyte may be a material comprising sulfur (S) and having conductivity of Group 1 or Group 2 metal ions of the periodic table used in a secondary battery. For example, it may be a Li-P-S-based glass or a Li-P-S-based glass ceramic having lithium ion conductivity.

Examples of the sulfide-based solid electrolyte may be at least one selected from the group consisting of Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂ and Li₂S-GeS₂-ZnS. Among these, Li₆PS₅Cl, Li₆PS₅Br, and Li₆PS₅I are also referred to as Argyrodite-type solid electrolytes. Meanwhile, the solid electrolyte may be doped with a trace amount of an element, such as, for example, Li₆PS₅Cl doped with bromine (Br).

An oxide-based solid electrolyte may be a material comprising oxygen (O) and having conductivity of Group 1 or Group 2 metal ions of the periodic table used in a secondary battery. For example, it may be at least one selected from the group consisting of an LLTO-based compound, Li₆La₂CaTa₂O₁₂, Li₆La₂ACaNb₂O₁₂, Li₆La₂ASrNb₂O₁₂, Li₂Nd₃TeSbO₁₂, Li₃BO_{2.5}N_{0.5}, Li₉SiAlO₈, an LAGP-based compound, an LATP-based compound, Li₁₊ₓTi₂₋ₓAlₓSi_{y}(PO₄)_{3-y} (wherein 0 ≤ x ≤ 1, 0 ≤ y ≤ 1), LiAlₓZr₂₋ₓ(PO₄)₃ (wherein 0 ≤ x ≤ 1, 0 ≤ y ≤ 1), LiTiₓZr₂₋ₓ(PO₄)₃ (wherein 0 ≤ x ≤ 1, 0 ≤ y ≤ 1), a LISICON-based compound, a LIPON-based compound, a perovskite-based compound, a NASICON-based compound, and an LLZO-based compound.

Meanwhile, a polymer-based solid electrolyte may be one in which a salt of Group 1 or Group 2 metal ions of the periodic table used in a secondary battery is complexed with a polymer resin. For example, it may be one in which a polymer resin is added to a solvated lithium salt.

The salt of the metal ions may be, for example, an ionic compound in which a metal cation is bonded with an anion such as F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The polymer resin includes, for example, a polyether-based polymer, a polycarbonate-based polymer, an acrylate-based polymer, a polysiloxane-based polymer, a phosphazene-based polymer, a polyethylene derivative, an alkylene oxide derivative such as polyethylene oxide, a phosphoric acid ester polymer, polyagitation lysine, polyester sulfide, polyvinyl alcohol, polyvinylidene fluoride, a polymer comprising an ionic dissociable group, a branched copolymer in which an amorphous polymer such as PMMA, polycarbonate, polysiloxane (PDMS), or phosphazene is copolymerized as a comonomer with a poly ethylene oxide (PEO) main chain, a comb-like polymer resin, and a crosslinked polymer resin.

A content of the solid electrolyte in the solid electrolyte membrane may be 90 to 99.5% by weight, for example, 90% by weight, 90.5% by weight, 91% by weight, 91.5% by weight, 92% by weight, 92.5% by weight, 93% by weight, 93.5% by weight, 94% by weight, 94.5% by weight, 95% by weight, 95.5% by weight, 96% by weight, 96.5% by weight, 97% by weight, 97.5% by weight, 98% by weight, 98.5% by weight, 99% by weight, 99.5% by weight, or a range between any two values among these. As the ratio of the solid electrolyte increases, the ionic conductivity of the solid electrolyte membrane may increase; however, if the block copolymer is insufficient, binding between the solid electrolytes may be insufficient, making it difficult to maintain the membrane shape.

The block copolymer functions as a binder that interconnects the solid electrolyte, which is a particulate material, in the solid electrolyte membrane.

The block copolymer comprises a unit structure derived from an aromatic vinyl monomer and a unit structure derived from a conjugated diene-based monomer. Here, comprising a unit structure derived from a monomer means that the polymer or copolymer is manufactured by polymerizing the monomer. In such a polymer or copolymer, each monomer exists in a structure where one or more are repeated to form a polymer chain. This repeating structure is referred to as a unit structure, and one monomer may exist as various types of unit structures.

The aromatic vinyl monomer refers to a monomer comprising a cyclic structure having a conjugated pi-electron system, that is, an aromatic ring structure, and a vinyl structure which is a carbon-carbon double bond. For example, it may be at least one selected from the group consisting of styrene, alpha-methylstyrene, vinyltoluene, t-butylstyrene, halogen-substituted styrene, 1,3-dimethylstyrene, 2,4-dimethylstyrene, and ethylstyrene, but is not limited thereto. The conjugated structure of such an aromatic vinyl monomer can increase the ionic conductivity of the solid electrolyte membrane.

A content of the unit structure derived from the aromatic vinyl monomer may be 15 to 45 parts by weight based on 100 parts by weight of the block copolymer, for example, 15 parts by weight, 17.5 parts by weight, 20 parts by weight, 22.5 parts by weight, 25 parts by weight, 27.5 parts by weight, 30 parts by weight, 32.5 parts by weight, 35 parts by weight, 37.5 parts by weight, 40 parts by weight, 42.5 parts by weight, 45 parts by weight, or a range between any two values among these. When the content of the unit structure derived from the aromatic vinyl monomer satisfies the above range, the flexibility and ionic conductivity of the solid electrolyte membrane can be excellently balanced.

When the content of the unit structure derived from the aromatic vinyl monomer increases, the chain of the copolymer becomes relatively rigid, and the cohesive force increases in a certain region of the polymer chain, whereby the adhesive strength can increase. In addition, the ionic conductivity of the solid electrolyte membrane can be improved. Meanwhile, if the content of the unit structure derived from the aromatic vinyl monomer is excessively high, the flexibility of the polymer chain decreases, which may deteriorate the physical properties of the solid electrolyte membrane. For example, the flexibility of the electrolyte membrane decreases, and it may become difficult to peel it from a release film.

The conjugated diene-based monomer refers to a hydrocarbon-based compound comprising a structure in which two carbon-carbon double bonds are directly connected by a carbon-carbon single bond. For example, it may be at least one selected from the group consisting of 1,3-butadiene, isoprene, 2,3-dimethyl-1,3-butadiene, 2,3-dimethylbutadiene, 2-phenyl-1,3-butadiene, 2-chlor-1,3-butadiene, 1,3-pentadiene, 2-methyl-1,3-pentadiene, 3-methyl-1,3-pentadiene, 4-methyl-1,3-pentadiene, 1,3-hexadiene, 2-ethyl-1,3-butadiene, 2,4-hexadiene, and cyclo-1,3-hexadiene, but is not limited thereto.

The unit structure derived from the conjugated diene-based monomer may have one or more forms. For example, the unit structure derived from 1,3-butadiene may have a cis-1,4 structure, a trans-1,4 structure, or a vinyl-1,2 structure within the polymer chain. In the copolymer, the cis-1,4 structure may have high crystallinity and a low glass transition temperature (Tg). In addition, the trans-1,4 structure may have relatively low crystallinity. Meanwhile, the vinyl-1,2 structure may have a high glass transition temperature (Tg).

The unit structure derived from the conjugated diene-based monomer can impart elasticity to the copolymer. When the block copolymer used as a binder has elasticity, a capacity decrease due to a volume change of each component can be prevented in a battery comprising the solid electrolyte membrane.

Meanwhile, the copolymer may be a block copolymer in which one type of structure predominantly appears in a certain region of the polymer chain. For example, it may be in a form in which aromatic vinyl blocks are bonded to both ends of a region composed of a unit structure derived from a conjugated diene-based monomer, that is, a conjugated diene-based block. An example of such a block copolymer is a styrene-butadiene-styrene block copolymer.

Such a polymer structure can be confirmed by various conventional methods such as Fourier-transform infrared spectroscopy (FT-IR), nuclear magnetic resonance spectroscopy (NMR), differential scanning calorimetry (DSC), and the Koldhof method. For example, the block structure can be confirmed by the Koldhof method, in which a specific unit structure in the copolymer is stained with osmic acid and then observed with a transmission electron microscope.

In an example, the block copolymer may have a linear structure. Here, the linear structure may mean a form in which one unit structure is connected to two or fewer unit structures. The block copolymer may be 50% by weight or more of the total unit structures, for example, 50% by weight, 55% by weight, 60% by weight, 65% by weight, 70% by weight, 75% by weight, 80% by weight, 85% by weight, 90% by weight, 95% by weight, 100% by weight, or a range between any two values among these. When the ratio of the linear structure in the block copolymer is high, the adhesive speed of the binder can be increased.

Meanwhile, the block copolymer may comprise a branched structure within a chain thereof. Here, the branched structure may mean that one unit structure is connected to three or more unit structures. For example, when a coupling agent is added during polymerization of the block copolymer, one unit structure derived from the coupling agent may bond with three or more other unit structures to form a branched structure. The compound used as the coupling agent may comprise vinylalkylalkoxysilane, epoxyalkylalkoxysilane, mercaptoalkylalkoxysilane, vinylhaloalkoxysilane, alkylacyloxysilane, and the like.

For example, the coupling agent may be at least one selected from the group consisting of dimethyldichlorosilane, trimethylchlorosilane, methyldichlorosilane, methyltrichlorosilane, phenyltrichlorosilane, vinyltrichlorosilane, tetrachlorosilane, triethoxysilylpropyldiethylamine, vinyltrimethoxysilane, vinyltriethoxysilane, 2-(3,4-epoxycyclohexyl)ethyltrimethoxysilane, 3-glycidoxypropyldimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-acryloxypropyltrimethoxysilane, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, N-(vinylbenzyl)-2-aminoethyl-3-aminopropyltrimethoxysilane hydrochloride, tris-(trimethoxysilylpropyl)isocyanurate, vinyltris(methoxyethoxy)silane, methacryloxypropyltrimethoxysilane, 3-ureidopropyltrialkoxysilane, 3-mercaptopropylmethyldimethoxysilane, 3-mercaptopropyltrimethoxysilane, 3-mercaptopropyltriethoxysilane, 3-isocyanatepropyltriethoxysilane, 3-thiocyanatopropyltrimethoxysilane, 3-thiocyanatopropyltriethoxysilane, 3,3'-bis(trimethoxysilylpropyl)polysulfide, 3,3'-bis(triethoxysilylpropyl)polysulfide, 3,3'-bis(trimethoxysilylpropyl)tetrasulfide, 3,3'-bis(triethoxysilylpropyl)tetrasulfide, 3,3'-bis(trimethoxysilylpropyl)disulfide, 3,3'-bis(triethoxysilylpropyl)disulfide, and 3-(trimethoxysilyl)propylsuccinic anhydride, but is not limited thereto.

The ratio of the copolymer comprising such a branched structure can be confirmed directly or indirectly using various known methods. For example, after forming a branched structure using a coupling agent, the ratio can be confirmed using gel permeation chromatography (GPC). In GPC measurement results, the molecular weight of the branched block copolymer may be located in a region higher than the molecular weight of the linear block copolymer. Therefore, the ratio of the block copolymer comprising the branched structure can be confirmed from the area ratio of the relatively high molecular weight region. Meanwhile, the content of the branched structure may also be indirectly confirmed from the ratio of Mooney viscosity to solution viscosity.

A ratio of comprising the branched structure in the block copolymer may be 5 to 50% by weight, for example, 5% by weight, 7.5% by weight, 10% by weight, 12.5% by weight, 15% by weight, 17.5% by weight, 20% by weight, 22.5% by weight, 25% by weight, 27.5% by weight, 30% by weight, 32.5% by weight, 35% by weight, 37.5% by weight, 40% by weight, 42.5% by weight, 45% by weight, 47.5% by weight, 50% by weight, or a range between any two values among these.

In particular, when the block copolymer is in a form in which at least a portion of the branched structure is mixed, the solid electrolyte membrane has excellent ionic conductivity and flexibility, and can be easily peeled from a release film.

In an example, even if the block copolymer has a low content of the unit structure derived from the aromatic vinyl monomer, the ionic conductivity can be improved by increasing the ratio of the branched structure. As a result, a solid electrolyte membrane having excellently balanced ionic conductivity and flexibility can be formed.

A weight average molecular weight of the block copolymer may be 5,000 to 1,000,000 g/mol, for example, 5,000 g/mol, 10,000 g/mol, 15,000 g/mol, 20,000 g/mol, 25,000 g/mol, 30,000 g/mol, 35,000 g/mol, 40,000 g/mol, 45,000 g/mol, 50,000 g/mol, 55,000 g/mol, 60,000 g/mol, 65,000 g/mol, 70,000 g/mol, 75,000 g/mol, 80,000 g/mol, 85,000 g/mol, 90,000 g/mol, 95,000 g/mol, 100,000 g/mol, 125,000 g/mol, 150,000 g/mol, 175,000 g/mol, 200,000 g/mol, 225,000 g/mol, 250,000 g/mol, 300,000 g/mol, 350,000 g/mol, 400,000 g/mol, 450,000 g/mol, 500,000 g/mol, 550,000 g/mol, 600,000 g/mol, 650,000 g/mol, 700,000 g/mol, 750,000 g/mol, 800,000 g/mol, 850,000 g/mol, 900,000 g/mol, 950,000 g/mol, 1,000,000 g/mol, or a range between any two values among these. When the molecular weight of the block copolymer is high, the flexibility and ionic conductivity of the solid electrolyte membrane manufactured using the same can be excellent. However, if the molecular weight of the block copolymer is excessively high, the viscosity of a slurry for manufacturing the solid electrolyte membrane may become too high, or dispersibility in a solvent may decrease.

That is, by controlling the content of the unit structure derived from the aromatic vinyl monomer, the ratio of the branched structure, and the weight average molecular weight in relation to the block copolymer, which is a binder, the flexibility and ionic conductivity of the solid electrolyte membrane, which are in a complementary relationship, can be controlled in a balanced manner.

Meanwhile, the block copolymer may be dissolved in a non-polar solvent at room temperature. The non-polar solvent may be at least one selected from the group consisting of benzene, toluene, xylene, hexane, cyclohexane, methylcyclohexane, ethylcyclohexane, nonane, decane, decalin, tetralin, dodecane, dibromomethane, dichloromethane, chloroform, butyl butyrate, hexyl butyrate, and isobutyl isobutyrate. Such non-polar solvents have little or no reactivity with the solid electrolyte, but conventional copolymers for binders were difficult to disperse by dissolving in non-polar solvents. On the other hand, the block copolymer according to an aspect of the present disclosure can be well-dispersed even in a solvent having no or low reactivity with the solid electrolyte to form a slurry.

The block copolymer may be manufactured by polymerizing an aromatic vinyl-based monomer and a conjugated diene-based monomer in the presence of a catalyst. Here, an anionic polymerization initiator such as an organolithium compound like n-butyl lithium may be used as the catalyst, but is not limited thereto.

As a means for controlling the structure of the block copolymer, a randomization agent may be added during polymerization to control the polymerization reaction rate. Alternatively, a desired structure may be formed by using the difference in reactivity between the aromatic vinyl monomer and the conjugated diene-based monomer. In addition, a branched structure may be formed by adding a coupling agent.

In the solid electrolyte membrane, the block copolymer may be in a form bonded to at least a portion of a surface of the solid electrolyte. The block copolymer can form a solid electrolyte membrane in a form called a so-called free-standing or self-supporting film through binding between solid electrolyte particles. Such a film can maintain its shape without a support.

Therefore, the solid electrolyte membrane can replace the role of a separator comprised in a conventional secondary battery. Since a separator is interposed between a positive electrode and a negative electrode to prevent a short-circuit, the solid electrolyte membrane must also be able to prevent damage due to external impact or internal factors of the battery. If the solid electrolyte membrane is rigid, it is easily damaged and a short-circuit may occur; therefore, a solid electrolyte membrane having excellent flexibility is required. Using a flexible solid electrolyte membrane can increase the speed of a continuous process during manufacture of a battery cell.

A content of the block copolymer in the solid electrolyte membrane may be 0.5 to 10% by weight, for example, 0.5% by weight, 1% by weight, 1.5% by weight, 2% by weight, 2.5% by weight, 3% by weight, 3.5% by weight, 4% by weight, 4.5% by weight, 5% by weight, 5.5% by weight, 6% by weight, 6.5% by weight, 7% by weight, 7.5% by weight, 8% by weight, 8.5% by weight, 9% by weight, 9.5% by weight, 10% by weight, or a range between any two values among these. During ionic conduction in the solid electrolyte membrane, the block copolymer, which is a binder, may act as a kind of resistance. Meanwhile, if the content of the block copolymer is insufficient, it may be difficult to form and maintain a free-standing film.

A thickness of the solid electrolyte membrane may be 30 to 200 µm, for example, 30 µm, 35 µm, 40 µm, 45 µm, 50 µm, 75 µm, 100 µm, 125 µm, 150 µm, 175 µm, 200 µm, or a range between any two values among these. When satisfying such a range, stability and performance can be excellently balanced in a battery to which the solid electrolyte membrane is applied.

An ionic conductivity of the solid electrolyte membrane may be 1.2 to 10 mS/cm, for example, 1.2 mS/cm, 1.5 mS/cm, 2.5 mS/cm, 5 mS/cm, 7.5 mS/cm, 10 mS/cm, or a range between any two values among these.

The solid electrolyte membrane can be manufactured by preparing a slurry by mixing a solid electrolyte, a block copolymer, and a solvent, coating the slurry on one surface of a release film, drying the same, and then removing the release film.

### All-Solid-State Battery

An all-solid-state battery according to another aspect is an all-solid-state battery comprising a positive electrode, a negative electrode, and a solid electrolyte membrane interposed therebetween, wherein the solid electrolyte membrane may be the aforementioned solid electrolyte membrane.

In an example, the all-solid-state battery may be a type of lithium secondary battery, and here, the types of the positive electrode and the negative electrode are not limited. For example, it may be a lithium-air battery, a lithium oxide battery, a lithium-sulfur battery, or a lithium metal battery.

The positive electrode or the negative electrode may be one in which a layer, where a positive electrode active material or a negative electrode active material and, if necessary, a conductive material and a binder are mixed, is formed on at least one surface of a current collector. Such a mixed layer may be formed by coating a slurry, in which an active material, a conductive material, and a binder are mixed in a solvent, onto a current collector and removing the solvent by drying.

Here, as a method for coating the electrode slurry, methods such as a doctor blade, die casting, comma coating, and screen printing may be exemplified. In addition, the electrode slurry may be bonded to the current collector by forming it on a separate substrate and then performing pressing or lamination. At this time, the coating thickness can be controlled by adjusting the concentration of the slurry solution or the number of coatings.

The drying process is a process of drying the slurry coated on the current collector to remove the solvent and moisture, and the specific method may vary depending on the solvent used. For example, it is performed in a vacuum oven at 50 to 200 °C. As examples of other drying methods, a drying method by warm air, hot air, or low-humidity air, vacuum drying, and a drying method by irradiation of (far) infrared rays or electron beams may be exemplified. Typically, drying is performed in a range of 30 seconds to 24 hours.

After the drying process, a cooling process may be further comprised. As an example of the cooling process, there is a method of slow cooling to room temperature so that a recrystallized structure of the binder is well-formed.

In addition, if necessary, after the drying process, a rolling process of compressing the electrode to a desired thickness may be performed to increase the capacity density of the electrode and increase the adhesion between the current collector and the active materials. Such a rolling process can be performed by a known method such as passing between rotating rolls or using a flat plate press.

The positive electrode active material may comprise, for example, layered compounds such as lithium cobalt oxide (LiCoO₂) and lithium nickel oxide (LiNiO₂), or compounds in which some of these are substituted with transition metals; lithium manganese oxides such as those of the formula Li₁₊ₓMn₂₋ₓO₄(0≤x≤0.33), LiMnO₃, LiMn₂O₃, and LiMnO₂; lithium copper oxide (Li₂CuO₂); vanadium oxides such as LiV₃O₈, V₂O₅, and Cu₂V₂O₇; Ni-site type lithium nickel oxides represented by the formula LiNi₁₋ₓMₓO₂ (M = Co, Mn, Al, Cu, Fe, Mg, B, or Ga; 0.01 ≤ x ≤ 0.3); lithium manganese composite oxides represented by the formula LiMn₂₋ₓMₓO₂ (M = Co, Ni, Fe, Cr, Zn, or Ta; 0.01 ≤ x ≤ 0.1) or Li₂Mn₃MO₈ (where M = Fe, Co, Ni, Cu, or Zn); lithium manganese composite oxides of a spinel structure represented by LiNiₓMn₂₋ₓO₄; LiCoPO₄; LiFePO₄; sulfur-based compounds such as elemental sulfur (S₈), Li₂Sn (n=1), organic sulfur compounds, or carbon-sulfur polymers ((C₂Sₓ)ₙ: x=2.5 to 50, n=2), but is not limited thereto.

As the negative electrode active material, a compound capable of reversible intercalation/deintercalation of lithium ions (Li⁺) may be used. For example, it may be, but is not limited to, carbon-based materials such as crystalline artificial graphite, crystalline natural graphite, amorphous hard carbon, low-crystalline soft carbon, carbon black, acetylene black, Ketjen black, Super-P, graphene, and fibrous carbon; Si-based materials; metal composite oxides such as LiₓFe₂O₃ (0 ≤ x ≤ 1), LiₓWO₂ (0 ≤ x ≤ 1), and SnₓMe₁₋ₓMe'_{y}O_{z} (Me: Mn, Fe, Pb, Ge; Me': Al, B, P, Si, elements of Groups 1, 2, and 3 of the periodic table, halogens; 0 < x ≤ 1; 1 ≤ y ≤ 3; 1 ≤ z ≤ 8); lithium metal; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni based materials; titanium oxide; and lithium titanium oxide.

The current collector is for supporting the electrode active material, and its type is not limited as long as it has excellent conductivity and is electrochemically stable under the use conditions of the all-solid-state battery. For example, the current collector may be at least one selected from the group consisting of carbon, copper, aluminum, stainless steel, titanium, silver, palladium, and nickel, or an alloy of two or more of these. Alternatively, the surface of the current collector may be surface-treated with at least one of carbon, nickel, titanium, and silver.

Meanwhile, fine irregularities may be formed on the surface of the current collector to strengthen the bonding force with the positive electrode active material, and various forms such as a film, a sheet, a foil, a mesh, a net, a porous body, a foam, and a non-woven fabric may be used.

Meanwhile, the conductive material is a material used as a path through which electrons move from the current collector to the electrode active material by electrically connecting the electrolyte and the electrode active material, and any material having porosity and conductivity without causing chemical changes under the use conditions of the all-solid-state battery can be used without limitation.

As an example of the conductive material, there are carbon-based materials having porosity, metallic fibers, metallic powders, organic conductive materials, and the like. Examples of the carbon-based materials include carbon black, graphite, graphene, activated carbon, carbon fiber, and carbon nanotubes. Copper, silver, nickel, aluminum, or the like can be used as the metallic fibers or metallic powders, and an example of the organic conductive materials includes a polyphenylene derivative.

The type of the binder for electrodes is not limited as long as it can further increase the binding force between the components constituting the electrode and between these components and the current collector. For example, there are fluorine resin-based binders such as polyvinylidene fluoride (PVdF) and polytetrafluoroethylene (PTFE); rubber-based binders such as styrene butadiene rubber (SBR), acrylonitrile-butadiene rubber, and styrene-isoprene rubber; cellulose-based binders such as carboxylmethyl cellulose (CMC), starch, hydroxypropyl cellulose, and regenerated cellulose; polyalcohol-based binders; polyolefin-based binders such as polyethylene and polypropylene; polyimide-based binders; polyester-based binders; silane-based binders; and the like.

The method for manufacturing the all-solid-state battery is not particularly limited, and known methods can be utilized.

For example, a cell can be manufactured by disposing a solid electrolyte membrane between a positive electrode and a negative electrode and then compression-molding the same. After installing the assembled cell in an exterior material, it can be sealed by performing a process such as heat compression. Here, as the exterior material, a laminate pack of aluminum, stainless steel, or the like, or a metal container of a cylindrical or prismatic shape can be used.

The all-solid-state battery may have various shapes such as a cylindrical type, a stacked type, and a coin type depending on the exterior material used.

Hereinafter, examples of the specification will be described in further detail. However, the following experimental results describe only representative experimental results among the examples, and the scope and content of the specification cannot be interpreted as being reduced or limited by the examples and the like. Each effect of various embodiments of the specification not explicitly presented below will be specifically described in the corresponding part.

### Experimental Example 1

- Example 1A: A multifunctional solution styrene-butadiene rubber having a styrene content of 21% by weight, a vinyl content of 63% by weight, and a Tg of -28 °C was set as Example 1A.
- Example 1B: A styrene-butadiene rubber (emulsion styrene-butadiene rubber) manufactured by low-temperature emulsion polymerization and having a styrene content of 23.5% by weight was set as Example 1B.
- Example 1C: An acrylonitrile butadiene rubber having an acrylonitrile content of 34% by weight was set as Example 1C.
- Example 1D: A styrene-butadiene-styrene copolymer having a linear structure, a styrene content of 40.5% by weight, and a weight average molecular weight of 50,000 g/mol was set as Example 1D.
- Example 1E: A butadiene rubber having a cis-1,4 group content of 96% by weight or more and a raw Mooney viscosity (ML₁₊₄@100 °C) of 43 was set as Example 1E.
- Solid Electrolyte: Argyrodite (Li₆PS₅Cl) was set as a solid electrolyte material used in the experimental examples.

The dispersibility of the binders was confirmed by mixing 5 parts by weight of each of the binders of Examples 1A to 1E with 100 parts by weight of a xylene or isobutyl isobutyrate solvent.

Subsequently, 495 parts by weight of the solid electrolyte was added to prepare a solid electrolyte slurry, and the stability of the binder upon addition of the electrolyte was confirmed.

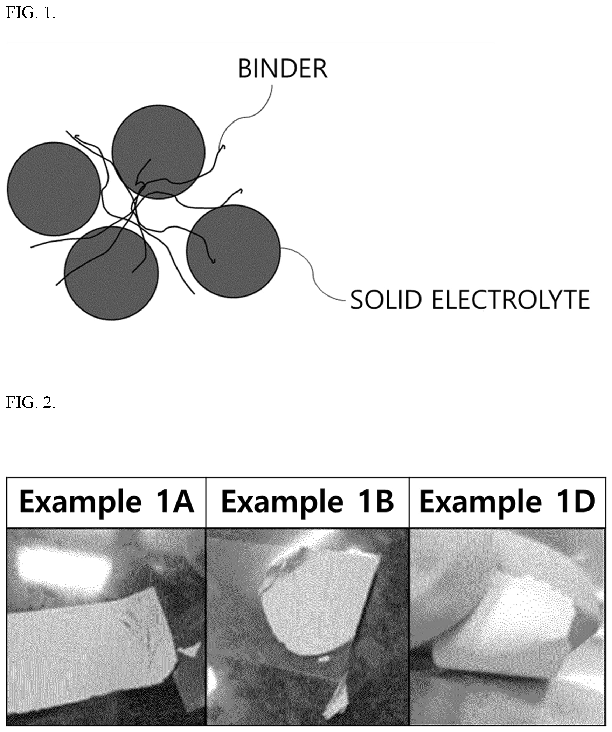

The slurry was coated on a polyethylene terephthalate release film and then dried at room temperature for 2 hours and at 70 °C for 5 hours to form a solid electrolyte membrane. The ionic conductivity of the solid electrolyte membrane was measured, and the physical properties of the solid electrolyte membrane were confirmed while separating it from the release film. The results are shown in Table 1 below and FIG. 2.

**[Table 1]**

| Classification | Xylene | | | Isobutyl isobutyrate | | |
|---|---|---|---|---|---|---|
| | Dispersibility | Stability | Membrane physical properties | Dispersibility | Stability | Membrane physical properties |
| Example 1A | ○ | ○ | × | ○ | ○ | × |
| Example 1B | ○ | ○ | × | ○ | Δ | × |
| Example 1C | Δ | × | × | × | - | - |
| Example 1D | ○ | Δ | ○ | ○ | Δ | ○ |
| Example 1E | ○ | ○ | ○ | ○ | Δ | × |

In the above table, among the evaluation items, an excellent one is indicated by "○", one that is usable but whose characteristics cannot be identified is indicated by "△", and one that cannot be used due to poor characteristics is indicated by "×".

Referring to Table 1, when the binder of Example 1A was used by being dispersed in isobutyl isobutyrate, the electrolyte membrane lacked flexibility during the process of separating it from the release film and was easily damaged. The binder of Example 1B was unusable because the electrolyte membrane was not peeled from the release film. In the case of the binder of Example 1C, the electrolyte and the binder were mutually agglomerated and could not be dispersed. Although it was difficult to confirm the stability of the binder of Example 1D due to its very low viscosity, the flexibility of the electrolyte membrane prepared therefrom was the most excellent among the electrolyte membranes of Example 1. The binder of Example 1E had a problem of being easily broken during the preparation of the electrolyte membrane using isobutyl isobutyrate.

Meanwhile, as a result of confirming the ionic conduction characteristics of the electrolyte membranes of Examples 1A, 1B, and 1D, for which ionic conductivity measurement was possible among the electrolyte membranes prepared in Example 1, the ionic conductivity of Example 1D was the most excellent, Example 1B was somewhat inferior to Example 1D, and Example 1A showed an ionic conductivity significantly inferior to that of Example 1D.

### Experimental Example 2

The styrene-butadiene-styrene copolymer of Example 1D, which enabled the preparation of the most excellent electrolyte membrane in Experimental Example 1, was prepared as a binder with different characteristics as follows.
- Example 2A: A linear styrene-butadiene-styrene copolymer having a styrene content of 40.5% by weight and a weight average molecular weight of 50,000 g/mol was set as Example 2A.
- Example 2B: A linear styrene-butadiene-styrene copolymer having a styrene content of 31.5% by weight and a weight average molecular weight of 50,000 g/mol was set as Example 2B.
- Example 2C: A branched styrene-butadiene-styrene copolymer having a styrene content of 31.5% by weight and a weight average molecular weight of 50,000 g/mol was set as Example 2C.
- Example 2D: A styrene-butadiene-styrene copolymer having a styrene content of 20% by weight and a weight average molecular weight of 190,000 g/mol was set as Example 2D. The copolymer of Example 2D was generally linear, but branched structures were partially mixed in the polymer chains.
- Example 2E: A styrene-butadiene-styrene copolymer having a styrene content of 45% by weight and a weight average molecular weight of 220,000 g/mol was set as Example 2E. The copolymer of Example 2E was generally linear, but branched structures were partially mixed in the polymer chains.
- Solid Electrolyte: Argyrodite (Li₆PS₅Cl) was set as a solid electrolyte material used in the experimental examples.

The dispersibility of the binder was confirmed by mixing any one binder of Examples 2A to 2E with an isobutyl isobutyrate solvent at a weight ratio of 1:20, respectively.

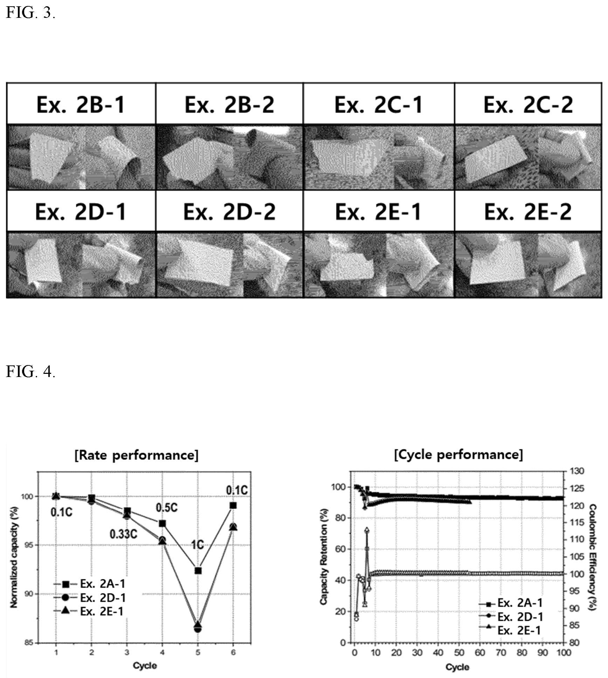

Subsequently, a solid electrolyte slurry was prepared by adding 49 parts by weight (2% by weight of binder) or 19 parts by weight (5% by weight of binder) of the solid electrolyte based on 1 part by weight of the binder. The slurry was coated on a polyethylene terephthalate release film and then dried at room temperature for 2 hours and at 70 °C for 5 hours to form a solid electrolyte membrane. The ionic conductivity of the solid electrolyte membrane was measured, and the physical properties of the solid electrolyte membrane were confirmed while separating it from the release film. The results are shown in Table 2 below and FIG. 3. Here, the ionic conductivity was expressed as a higher number as it becomes more excellent, based on the electrolyte membranes (100) to which 2% by weight and 5% by weight of the binder of Example 2A were applied, respectively.

**[Table 2]**

| Classification | Binder Dispersibility | Binder Content | Ionic Conductivity | Flexibility |
|---|---|---|---|---|
| Example 2A-1 | ⊚ | 2 wt% | 100 | ○ |
| Example 2A-2 | | 5 wt% | 100 | ○ |
| Example 2B-1 | ○ | 2 wt% | 91.9 | ○ |
| Example 2B-2 | | 5 wt% | 96.4 | ○ |
| Example 2C-1 | ○ | 2 wt% | 86.9 | ○ |
| Example 2C-2 | | 5 wt% | 101.8 | ○ |
| Example 2D-1 | ○ | 2 wt% | 105.1 | ○ |
| Example 2D-2 | | 5 wt% | 112.5 | ○ |
| Example 2E-1 | ○ | 2 wt% | 112.1 | ○ |
| Example 2E-2 | | 5 wt% | 119.6 | ○ |

According to Experimental Example 2, in the styrene-butadiene-styrene copolymer binder, as the styrene content increases, the flexibility tends to decrease, and it appears difficult to peel the electrolyte membrane from the release film. In addition, it is judged that when the copolymer has a branched structure, the electrolyte membrane is easily peeled and has superior flexibility. Meanwhile, the characteristics of the electrolyte membrane may vary depending on the balance of the styrene content, the chain structure of the copolymer, and the molecular weight. While a tendency is confirmed that the ionic conductivity increases as the styrene content increases, even if the styrene content is low, it can be advantageous in terms of ionic conductivity and flexibility as the copolymer comprises a branched structure and has a higher molecular weight.

### Experimental Example 3

A positive electrode was manufactured by mixing an NCM811 positive electrode active material, a carbon fiber conductive material, an argyrodite solid electrolyte, and a polytetrafluoroethylene binder at a weight ratio of 84:0.2:14.8:1, followed by rolling.

A negative electrode was manufactured by coating a mixture of a carbon black negative electrode active material and polyvinylidene fluoride to a thickness of 150 µm on a SUS negative electrode current collector having a thickness of 10 µm.

An all-solid-state battery in a mono-cell form was manufactured by interposing the electrolyte membranes of Examples 2A-1, 2D-1, and 2E-1 between the manufactured positive electrode and negative electrode, followed by pressing.

The charge/discharge characteristics of the manufactured all-solid-state battery were measured by repeating charging and discharging under conditions of 3.0 to 4.25 V and 1 C, and the results are shown in FIG. 4.

According to an aspect, it is possible to provide a solid electrolyte membrane having an excellent balance of ionic conductivity and flexibility.

In addition, it is possible to provide an all-solid-state battery having excellent characteristics by using such a solid electrolyte membrane.

The effects of an aspect of the present disclosure are not limited to the aforementioned effects, and should be understood to comprise all effects that can be inferred from the configurations described in the detailed description or the claims of the present disclosure.

The description of the present disclosure provided above is for illustrative purposes, and those of ordinary skill in the art to which an aspect of the present disclosure pertains will be able to understand that modification into other specific forms can be easily made without changing the technical spirit or essential features described in the present disclosure. Therefore, it should be understood that the examples described above are illustrative in all aspects and not restrictive. For example, each component described as a single type may be implemented in a dispersed manner, and similarly, components described as being dispersed may also be implemented in a combined form.

The scope of the present disclosure is indicated by the appended claims, and all changes or modifications derived from the meaning and scope of the claims and their equivalent concepts should be interpreted as being comprised in the scope of the present disclosure.

## Claims

1. A solid electrolyte membrane comprising:
a solid electrolyte; and
a block copolymer comprising a unit structure derived from an aromatic vinyl monomer and a unit structure derived from a conjugated diene-based monomer.

2. The solid electrolyte membrane according to claim 1, wherein a content of the unit structure derived from the aromatic vinyl monomer is 15 to 45 parts by weight based on 100 parts by weight of the block copolymer.

3. The solid electrolyte membrane according to claim 1, wherein at least a portion of the block copolymer comprises a branched structure within a chain thereof.

4. The solid electrolyte membrane according to claim 3, wherein a ratio of comprising the branched structure in the block copolymer is 5 to 50% by weight.

5. The solid electrolyte membrane according to claim 1, wherein a weight average molecular weight of the block copolymer is 5,000 to 1,000,000 g/mol.

6. The solid electrolyte membrane according to claim 1, wherein the block copolymer is dissolved in a non-polar solvent at room temperature.

7. The solid electrolyte membrane according to claim 1, wherein the block copolymer is bonded to at least a portion of a surface of the solid electrolyte.

8. The solid electrolyte membrane according to claim 1, wherein an ionic conductivity of the solid electrolyte membrane is 1.2 to 10 mS/cm.

9. An all-solid-state battery comprising a positive electrode, a negative electrode, and a solid electrolyte membrane interposed therebetween,
wherein the solid electrolyte membrane is according to claim 1.
